# EUROPÄISCHE PATENTSCHRIFT

(11) **EP 0 573 678 B1**
(45) Veröffentlichungstag und Bekanntmachung des Hinweises auf die Patenterteilung: **01.03.1995**
(21) Anmeldenummer: 92109141.9
(22) Anmeldetag: 29.05.1992
(51) Int. Cl.: B23Q 39/04, B23B 3/30

(54) **Mehrspindel-Drehmaschine**
Multiple spindle lathe
Tour multibroche

(43) Veröffentlichungstag der Anmeldung: 15.12.1993
(73) Patentinhaber: GILDEMEISTER ITALIANA S.p.A., I-24030 Brembate di Sopra (IT)
(72) Erfinder: Batisti, Ettore, I-24100 Bergamo (IT); Mascheroni, Alberto, I-20032 Cormano (MI) (IT)
(74) Vertreter: Thielking, Bodo, Dipl.-Ing.

(56) Entgegenhaltungen:
- EP-A- 0 356 389
- DE-A- 1 752 738

## Beschreibung

Die Erfindung betrifft eine Mehrspindel-Drehmaschine mit drei Werkstückspindeln, die in einer um eine horizontale Achse schwenkbaren und in drei Spindellagen schaltbaren Spindeltrommel gelagert sind und Spannvorrichtungen für die zu bearbeitender Werkstücke aufweisen, wobei jeder Spindellage Werkzeugträger mit gegenüber den Werkstücken verfahrbaren Werkzeugen zugeordnet sind und die der ersten und zweiten Spindellage zugeordneten Werkzeugträger auf Kreuzschlitten angeordnete Revolverköpfe sind.

Bei einer bekannten derartigen Drehmaschine (DE-A-17 52 738) sind zwei Spindellagen jeweils Kreuzschlitten mit Werkzeugrevolvern zugeordnet, während mit der dritten Spindellage ein lediglich in Spindelachsrichtung verschiebbarer Werkzeugträger korrespondiert, der angetriebene Bearbeitungswerkzeuge aufweist. Die den ersten beiden Spindellagen zugeorndeten Werkzeugrevolver tragen sowohl die Innen- als auch die Außenbearbeitungswerkzeuge. Die Bearbeitung mit diesen Werkzeugen kann demnach jeweils nur nacheinander erfolgen. Die dritte Spindellage der bekannten Drehmaschine fällt für eine Drehbearbeitung aus, sie dient dem Be- und Entladen sowie der zusätzlichen Innenbearbeitung mit angetriebenen Werkzeugen. Da für die Außenbearbeitung der Werkstücke nur zwei Spindellagen zur Verfügung stehen, ist eine für eine wirtschaftliche Bearbeitung angestrebte, möglichst zeitgleiche Aufteilung der Bearbeitungsvorgänge auf die verschiedenen Spindellagen bzw. Werkstückspindeln ausgeschlossen.

Es ist ferner eine Mehrspindel-Drehmaschine mit drei Werkzeugspindeln bekannt (DE-A-16 52 670), bei der eine Spindellage ausschließlich für den Be- und Entladevorgang blockiert ist. Einer zweiten Spindellage ist ein Kreuzschlitten mit Werkzeugen für die Außenbearbeitung zugeordnet und in der dritten Spindellage ist ein schaltbarer Bohrkopfträger für angetriebene Innenbearbeitungswerkzeuge vorgesehen. Die Bohrköpfe übernehmen dabei die Vorschubbewegung in Spindelachsrichtung. Bei dieser bekannten Lösung sind die Innenbearbeitung und die Außenbearbeitung streng voneinander getrennt auf zwei unterschiedliche Spindellagen aufgeteilt. Da die Dauer der Außenbearbeitung in der Regel stark von der Bearbeitungsdauer der Innenbearbeitungen abweicht, ist allein deshalb eine gute Auslastung der bekannten Werkzeugmaschine ausgeschlossen. Dieser Nachteil wird nach verstärkt durch die Reservierung der dritten Spindellage ausschließlich für das Be- und Entladen.

Schließlich ist ein Mehrspindelautomat mit wesentlich mehr als drei Spindeln bekannt (EP-A- 298 672), bei dem einer Vielzahl von Werkstückspindeln jeweils ein Außenbearbeitungswerkzeug auf einem Planschlitten und ein Innenbearbeitungswerkzeug auf einem zentralen Werkzeugblock zugeordnet ist. In einer der zahlreichen Spindellagen ist eine Gegenspindel auf einem Kreuzschlitten vorgesehen, die das einseitig bearbeitete Werkstück von der gegenüberliegenden Hauptspindel abgreifen und einer weiteren Bearbeitung durch einen Werkzeugrevolver zuführen kann. Der Werkzeugrevolver ist ausschließlich der Gegenspindel zugeordnet, während den Hauptspindeln keinerlei schaltbare Werkzeugträger zugeordnet sind. Es kann bei dieser bekannten Maschine zwar an jeder Spindellage gleichzeitig ein Außenbearbeitungs- und ein Innenbearbeitungswerkzeug eingesetzt werden, da aber jeweils nur zwei linear verschiebbare Werkzeuge pro Spindellage zur Verfügung stehen, ist diese bekannte Lösung nur sinnvoll bei mehr als drei Hauptspindeln.

Es ist auch eine weitere Mehrspindel-Drehmaschine bekannt (EP 0 356 389 A1), bei der die Zahl der Werkstückspindeln nicht beschränkt ist. Bei dieser Entgegenhaltung erweist sich eine Eigenart von bekannten Mehrspindel-Drehmaschinen ebenfalls als besonders nachteilig, nämlich die Tatsache, daß die Taktfrequenz der Trommelschaltung bei Mehrspindel-Drehmaschinen durch die längste Bearbeitungszeit an einer Spindellage bestimmt wird. Für einen wirtschaftlichen Einsatz von Mehrspindel-Drehmaschinen müssen deshalb die Bearbeitungszeiten möglichst gleichmäßig auf die Werkstückspindeln verteilt werden, um deren möglichst günstige Auslastung zu erreichen. Dieses grundsätzlich angestrebte Ziel ist mit der zuletzt genannten bekannten Maschine bereits wegen der geringen Anzahl zur Verfügung stehender Werkzeuge nicht zu erreichen. Es ergeben sich vielmehr vergleichsweise lange Stillstandszeiten an denjenigen Spindeln, an denen nicht die zeitaufwendigsten Bearbeitungsvorgänge vorgenommen werden. Das Ziel einer möglichst günstigen Auslastung sämtlicher Werkstückspindeln kann damit auch bei dieser Mehrspindel-Drehmaschine nicht erreicht werden.

Der Erfindung liegt deshalb die Aufgabe zugrunde, eine Mehrspindel-Drehmaschine mit nur drei Werkstückspindeln in einer Spindeltrommel zu schaffen, welche besonders gut geeignet ist für einen flexiblen Einsatz mit möglichst gleichmäßiger Verteilung der Bearbeitungszeiten auf die verschiedenen Spindellagen, wobei diese Spindellagen zeitlich mit den Be- und Entladevorgängen und den rückseitigen Bearbeitungsvorgängen harmonisierbar sein sollen.

Die Lösung dieser Aufgabe erfolgt bei einer Mehrspindel-Drehmaschine der im Oberbegriff genannten Art dadurch, daß der ersten und zweiten Spindellage zusätzlich in Spindelachsrichtung verschiebbare Werkzeugträger zugeordnet sind und der dritten Spindellage eine in Spindelachsrichtung verfahrbare Gegenspindel koaxial gegenüberliegt, die zur Übernahme des Werkstücks von der jeweils gegenüberliegenden Hauptspindel und zur Aufnahme des Werkstücks während einer rückseitigen Drehbearbeitung ausgebildet ist, wobei der der dritten Spindellage zugeordnete Werkzeugträger mehrere nicht angetriebene Werkzeuge trägt, von denen mindestens jeweils eins zur Bearbeitung an der Hauptspindel und mindestens jeweils eins zur Bearbeitung an der Gegenspindel ausgebildet und angeordnet ist.

Dadurch, daß der ersten und zweiten Spindellage jeweils zwei Werkzeugträger zugeordnet sind, deren jeweils einer in x-Richtung und z-Richtung verfahrbar ist und deren jeweils anderer mindestens in z-Richtung verfahrbar ist, können beliebige Arbeitsgänge auf die ersten beiden Spindellagen verteilt werden. Eine solche Verteilung auf die Spindellagen 1 und 2 ist erforderlich, da die Bearbeitung an diesen ersten beiden Spindellagen mindestens um diejenige Zeit länger dauern muß als die Zeit, die in der dritten Spindellage für die Werkstückzuführung und Werkstückabführung benötigt wird. Da die Werkstückzuführung und Werkstückabführung bzw. die Werkstückübergabe stets in der dritten Spindellage erfolgt, genügt es, in der dritten Spindellage nur einen einzigen Werkzeugträger vorzusehen, mit dem eine zeitlich beschränkte Bearbeitung an der Hauptspindel sowie eine Restbearbeitung an der gegenüberliegenden Gegenspindel erfolgen kann. Dieser sowohl der dritten Spindellage als auch der gegenüberliegenden Gegenspindel zugeordnete Werkzeugträger dient also wegen der entgegengesetzt gerichteten Werkzeuge zur Bearbeitung von an beiden einander gegenüberliegenden Spindeln eingespannten Werkstücken.

Die erfindungsgemäße Mehrspindel-Drehmaschine erlaubt eine gleichmäßig verteilte und kollisionsfreie Bearbeitung mit zwei Werkzeugen in den ersten beiden Spindellagen, wenn auf den diesen Spindellagen zugeordneten Werkzeugträgern vorzugsweise Außenbearbeitungswerkzeuge und auf den zusätzlichen Werkzeugträgern vorzugsweise Innenbearbeitungswerkzeuge angeordnet werden.

Die Verstellung der zusätzlichen Werkzeugträger auch quer zur Spindelachsrichtung dient sowohl der Kompensation von Schneidenverschleiß als auch der Kompensation von Abweichungen des Werkzeugdurchmessers vom Bearbeitungsdurchmesser und dem Werkzeugwechsel. Ein derart ausgerüsteter Mehrspindel- Drehautomat kann sowohl zur Futterbearbeitung als auch zur Stangenbearbeitung eingesetzt werden.

Bevorzugte weitere Ausgestaltungen der Erfindung sind in den Unteransprüchen sowie in der nachfolgenden Zeichnungsbeschreibung geoffenbart. Es zeigen:

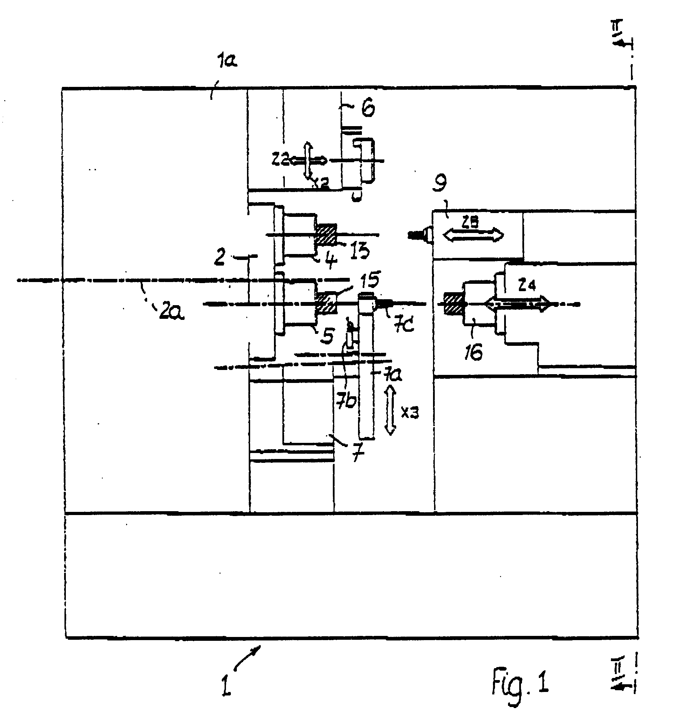

- Figur 1 -: eine schematische Seitenansicht einer ersten Ausführungsform der Mehrspindel-Drehmaschine,
- Figur 2 -: eine Ansicht in Richtung Ebene II-II gemaß Figur 1,
- Figur 3 -: eine Ansicht in Richtung des Pfeils III gemäß Figur 2,
- Figur 4 -: eine zweite Ausführungsform in einer zu Figur 2 analogen Darstellung.

In den Zeichnungen sind gleiche oder einander entsprechende Teile jeweils mit den gleichen Bezugszeichen bezeichnet.

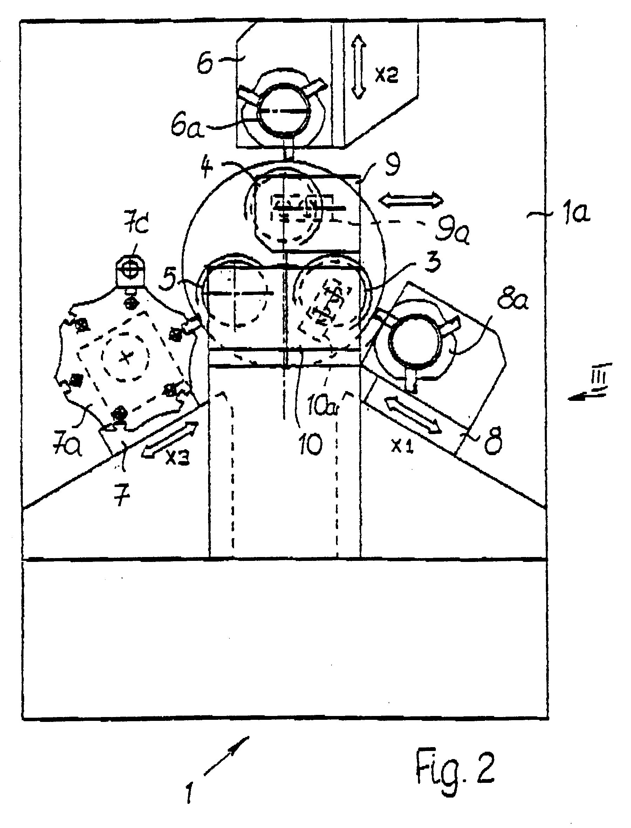

Das Maschinengestell 1 besitzt einen Spindeltrommelständer 1a, in dem eine Spindeltrommel 2 um eine horizontale Achse in drei zueinander um 120° versetzte Schwenkpositionen schaltbar ist. In der Spindeltrommel 2 sind drei Werkstückspindeln 3, 4 und 5 um jeweils 120° zueinander versetzt gelagert, welche Spannvorrichtungen für die zu bearbeitenden Werkstücke 13, 14 und 15 aufweisen. Die Position der Werkstückspindel 3 in Figur 2 ist die erste Spindellage 3', die Position der Werkstückspindel 4 in Figur 2 ist die zweite Spindellage 4' und die Position der Werkstückspindel 5 in Figur 2 ist die dritte Spindellage 5'.

Mit der ersten Spindellage 3' gemäß Spindel 3 wirkt ein Kreuzschlitten 8 zusammen, der einen Revolverkopf 8a als Werkzeugträger aufweist. Der Kreuzschlitten 8 ist in x-Richtung und z-Richtung verfahrbar. Mit der zweiten Spindellage 4' gemäß Werkstückspindel 4 korrespondiert ein weiterer Kreuzschlitten 6, der ebenfalls in x- und z-Richtung verfahrbar ist. Er trägt einen als Revolverkopf 6a ausgebildeten Werkzeugträger. Der ersten und zweiten Spindellage sind zusätzliche, in Spindelachsrichtung verschiebbare Werkzeugschlitten 9 und 10 zugeordnet. Der dritten Spindellage 5' gemäß Werkstückspindel 5 liegt eine Gegenspindel 16 mit einer ortsfesten Drehachse gegenüber, welche in z- Achsenrichtung verfahrbar ist. Die Gegenspindel 16 kann das Werkstück 15 aus der gegenüberliegenden Werkstückspindel 5 entnehmen, so daß dieses Werkstück an der Rückseite bearbeitet werden kann. Mit der Werkstückspindel 5 und der Gegenspindel 16 arbeitet ein in x- und z-Richtung verfahrbarer Kreuzschlitten 7 zusammen, der einen Revolverkopf 7a als Werkzeugträger aufweist. Ein Werkzeug 7c ist in Richtung auf die Gegenspindel 16 gerichtet, ein Werkzeug 7b dient zur Bearbeitung des Werkstücke 15 in der Werkstückspindel 5.

An den zusätzlichen Werkzeugschlitten 9 und 10 können Querschieber 9a und 10a gemäß Figur 2 befestigt sein, die den Wechsel mehrerer Innenbearbeitungswerkzeuge ermöglichen.

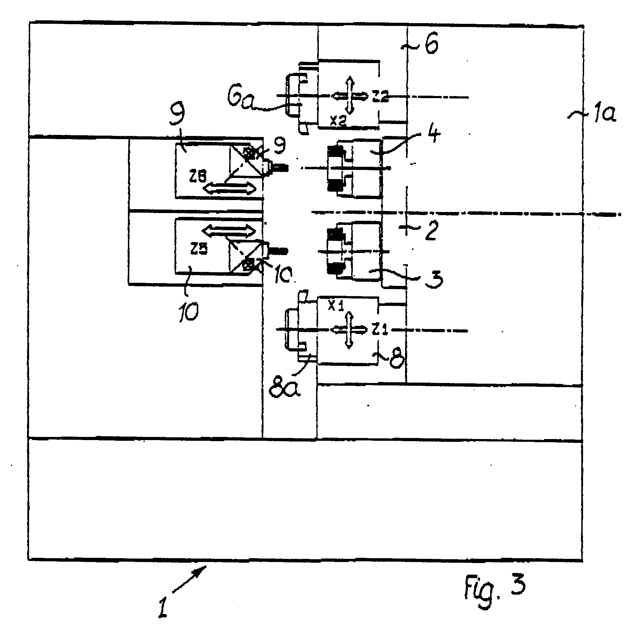

Figur 3 zeigt die Mehrspindel-Drehmaschine mit Blick auf die Werkstückspindeln 3 und 4, denen die zusätzlichen Längsschlitten 9 und 10 mit Kronenrevolvern 9b und 10b für die Innenbearbeitungswerkzeuge zugeordnet sind.

Wenn die zusätzlichen Werkzeugschlitten 9 und 10 als Kreuzschlitten ausgebildet werden, können darauf alternativ auch Außenbearbeitungswerkzeuge angeordnet werden.

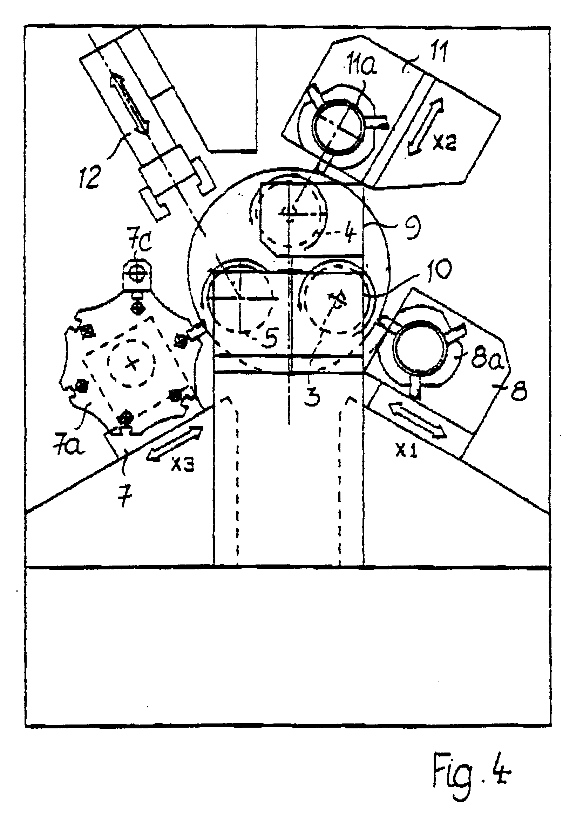

Bei der zweiten Ausführungsform gemäß Figur 4 ist gegenüber der ersten Ausführungsform lediglich die Anordnung des Kreuzschlittens 11 mit als Werkzeugrevolver 11a ausgebildetem Werkzeugträger anstelle des Kreuzschlittens 6 mit Werkzeugrevolver 6a. Neben dem schräg angeordneten Kreuzschlitten 11 befindet sich eine Beschickungseinrichtung 12, mit der das Spannfutter der in Spindellage 5 befindlichen Werkstückspindel beladen und das Spannfutter der Gegenspindel 16 entladen werden kann.

## Patentansprüche

1. Mehrspindel-Drehmaschine mit nur drei Werkstückspindeln (3; 4; 5), die in einer um eine horizontale Achse schwenkbaren und in drei Spindellagen schaltbaren Spindeltrommel (2) gelagert sind und Spannvorrichtungen für die zu bearbeitenden Werkstücke (13; 14; 15) aufweisen, wobei jeder Spindellage (3; 4; 5) Werkzeugträger mit gegenüber den Werkstücken (13; 14; 15) verfahrbaren Werkzeugen zugeordnet sind und die der ersten und zweiten Spindellage zugeordneten Werkzeugträger auf Kreuzschlitten (8; 6) angeordnete Revolverköpfe (8a; 6a) sind,
dadurch gekennzeichnet,
daß der ersten und zweiten Spindellage (3'; 4') zusätzliche, in Spindelachsrichtung verschiebbare Werkzeugträger (10a; 9a) zugeordnet sind und der dritten Spindellage (5') eine in Spindelachsrichtung verfahrbare Gegenspindel (16) koaxial gegenüberliegt, die zur Übernahme des Werkstücks (13, 14; 15) von der jeweils gegenüberliegenden Werkstückspindel und zur Aufnahme des Werkstücks während einer rückseitigen Drehbearbeitung ausgebildet ist, wobei der der dritten Spindellage (5') zugeordnete Werkzeugträger (7a) mehrere nicht angetriebene Werkzeuge trägt, von denen mindestens jeweils eins (7b) zur Bearbeitung an der Werkstückspindel (5) und mindestens jeweils eins (7c) zur Bearbeitung an der Gegenspindel (16) ausgebildet und angeordnet ist.

2. Mehrspindel-Drehmaschine nach Anspruch 1,
dadurch gekennzeichnet,
daß die der ersten und zweiten Spindellage (3' und 4') zugeordneten zusätzlichen Werkzeugträger quer zur Spindelachsrichtung verfahrbar sind.

3. Mehrspindel-Drehmaschine nach Anspruch 1 oder 2,
dadurch gekennzeichnet,
daß die zusätzlichen Werkzeugträger schaltbare Werkzeugrevolver (9a; 10a) sind.

4. Mehrspindel-Drehmaschine nach einem oder mehreren der Ansprüche 1 bis 3,
dadurch gekennzeichnet,
daß mindestens ein Werkzeug eines zusätzlichen Werkzeugträgers (9a; 10a) rotierend antreibbar ist

5. Mehrspindel-Drehmaschine nach einem oder mehreren der Ansprüche 1 bis 4,
dadurch gekennzeichnet,
daß der der dritten Spindellage (5') zugeordnete Werkzeugträger (7a) auf einem Kreuzschlitten (7) angeordnet ist.

6. Mehrspindel-Drehmaschine nach einem oder mehreren der Ansprüche 1 bis 5,
dadurch gekennzeichnet,
daß die als Revolverköpfe (8a; 6a; 11a) ausgebildeten, der ersten und zweiten Spindellage (3' und 4') zugeordneten Werkzeugträger die Werkzeuge für die Außenbearbeitung tragen, während die zusätzlichen, der ersten und zweiten Spindellage (3' und 4') zugeordneten Werkzeugträger (10a; 9a) Werkzeuge für die Innenbearbeitung tragen.

7. Mehrspindel-Drehmaschine nach einem oder mehreren der Ansprüche 1 bis 6,
dadurch gekennzeichnet,
daß mindestens einer der zusätzlichen Werkzeugträger als Werkzeugpinole ausgebildet ist.

## Claims

1. Multi-spindle lathe with only three workpiece spindles (3; 4; 5) which are mounted in a spindle drum (2) which can swivel about a horizontal axis and can be switched into three spindle bearings, and having clamping devices for the workpieces (13; 14; 15) which are to be finished, wherein each spindle bearing (3; 4; 5) is associated with a tool holder with tools which can be moved relative to the workpieces (13; 14; 15) and wherein the tool holders associated with the first and second spindle bearing are turrets (8a; 6a) mounted on cross slides (8; 6),
characterised in that
the first and second spindle bearing (3'; 4') are associated with additional tool holders (10a; 9a) displaceable in the axial direction of the spindle, and coaxially opposite the third spindle bearing (5') is a counter spindle (16) which is movable in the axial direction of the spindle and is designed to transfer the workpiece (13, 14; 15) from each opposite workpiece spindle and to hold the workpiece during rotary finishing work on the reverse side where in the tool holder (7a) associated with the third spindle bearing (5') supports several non-driven tools of which at least each one (7b) is designed and arranged for working on the workpiece spindle (5) and at least one (7c) is designed for working on the counter spindle (16).

2. Multi-spindle lathe according to claim 1,
characterised in that
the additional tool holders associated with the first and second spindle bearing (3' and 4') are movable across the axial direction of the spindle.

3. Multi-spindle lathe according to claim 1 or 2
characterised in that
the additional tool holders are switchable tool turrets (9a; 10a).

4. Multi-spindle lathe according to one or more of claims 1 to 3
characterised in that
at least one tool of an additional tool holder (9a; 10a) is capable of being driven in rotation.

5. Multi-spindle lathe according to one or more of claims 1 to 4
characterised in that
the tool holder (7a) associated with the third spindle bearing (5') is mounted on a cross slide (7).

6. Multi-spindle lathe according to one or more of claims 1 to 5
characterised in that
the tool holders designed as turrets (8a; 6a; 11a) and associated with the first and second spindle bearings (3' and 4') support the tools for the external finishing work whilst the additional tool holders (10a; 9a) associated with the first and second spindle bearings (3' and 4') support tools for the internal finishing work.

7. Multi-spindle lathe according to one or more of claims 1 to 6
characterised in that
at least one of the additional tool holders is designed as a tool barrel.

## Revendications

1. Tour multibroche avec seulement trois broches porte-pièces (3; 4; 5), montées dans un tambour porte-broches (2) pivotant autour d'un axe horizontal et commutable dans trois positions de broches, et avec des dispositifs de serrage pour les pièces à usiner (13; 14; 15), des porte-outils, équipés d'outils déplaçables par rapport aux pièces d'oeuvre (13; 14; 15), étant coordonnés à chaque position de broches (3; 4; 5) et les porte-outils coordonnés à la première et à la deuxième position de broches étant des têtes de revolver (8a; 6a) disposées sur des chariots à croix (8; 6),
caractérisé en ce que
des porte-outils supplémentaires (10a; 9a), déplaçables dans la sens de l'axe des broches, sont coordonnés à la première et à la deuxième position de broches (3'; 4') et qu'une contre-broche (16), déplaçable dans le sens de l'axe des broches, est opposée coaxialement à la troisième position de broches et est conçue pour enlever la pièce d'oeuvre (13; 14; 15) de la broche porte-pièce respectivement opposée et à prendre en charge la pièce d'oeuvre pendant l'usinage de la face arrière, le porte-outil (7a), coordonne à la troisième position de broches (5') portant plusieurs outils non entraînés, dont un (7b), au moins, est conçu en vue du travail sur la broche porte-pièce (5) et un autre (7c), au moins, en vue du travail sur la contre-broche.

2. Tour multibroche selon la revendication 1,
caractérise en ce que
les porte-outils supplémentaires, coordonnés à la première et à la deuxième position de broches (3' et 4') sont déplaçables transversalement par rapport au sens de l'axe des broches.

3. Tour multibroche selon la revendication 1 ou 2,
caractérisé en ce que
les porte-outils supplémentaires sont des revolvers. (9a; 10a) commutables.

4. Tour multibroche selon l'une ou plusieurs des revendications 1 à 3,
caractérise en ce que
au moins un outil d'un porte-outil supplémentaire (9a; 10a) peut être entraîné en rotation.

5. Tour multibroche selon l'une ou plusieurs des revendications 1 à 4,
caractérisé en ce que
le porte-outil (7a), coordonné à la troisième position de broches (5') est dispose sur un chariot à croix (7).

6. Tour multibroche selon l'une ou plusieurs des revendications 1 à 5,
caractérisé en ce que
les porte-outils conçus sous forme de tourelles (8a; 6a; 11a) et coordonnés à la première et à la deuxième positions de broches (3' et 4') portent des outils destinés à l'usinage extérieur, tandis que les porte-outils supplémentaires (10a; 9a), coordonnés à la première et à la deuxième positions de broches (3' et 4') portent des outils destinés à l'usinage intérieur.

7. Tour multibroche selon l'une ou plusieurs des revendications 1 à 7,
caractérisé en ce que
l'un des porte-outils supplémentaires, au moins, est conçu sous forme de revolver.
